# EUROPÄISCHE PATENTSCHRIFT

(11) **EP 3 670 766 B1**
(45) Veröffentlichungstag und Bekanntmachung des Hinweises auf die Patenterteilung: **14.07.2021**
(21) Anmeldenummer: 19218297.0
(22) Anmeldetag: 19.12.2019
(51) Int. Cl.: E03C 1/02, E03C 1/04, E03C 1/042, F16L 43/00, F16L 59/16

(54) **ANSCHLUSSSET FÜR EINE TRINK- ODER BRAUCHWASSERINSTALLATION**
CONNECTION SET FOR A DRINKING OR DOMESTIC WATER INSTALLATION
ENSEMBLE RACCORD POUR UNE INSTALLATION D'EAU POTABLE OU D'EAU SANITAIRE

(30) Priorität: 20.12.2018 DE 202018005943 U
(43) Veröffentlichungstag der Anmeldung: 24.06.2020
(73) Patentinhaber: Gebr. Kemper GmbH + Co. KG Metallwerke, 57462 Olpe (DE)
(72) Erfinder: SPÖLER, Thomas, 46325 Borken (DE); Markert, Felix, 46359 Heiden (DE)
(74) Vertreter: Grünecker Patent- und Rechtsanwälte PartG mbB

(56) Entgegenhaltungen:
- WO-A1-2017/102154
- DE-A1-102016 103 547

## Beschreibung

Die vorliegende Erfindung betrifft ein Anschlussset, das eine Aufputzarmatur mit einem Armaturengehäuse beinhaltet, in das mindestens ein Absperrventil aufgenommen ist, und das einen Warmwasseranschluss, einen Kaltwasseranschluss und mindestens einen Auslauf aufweist. Solche Aufputzarmaturen sind allgemein bekannt. Die vorliegende Erfindung betrifft ferner eine Trink- oder Brauchwasserinstallation mit einer Aufputzarmatur. Solche Installationen sind auch allgemein bekannt.

Für gewöhnlich werden die Anschlüsse einer Aufputzarmatur jeweils mit einem in einer Wand liegenden Anschluss (im Folgenden: Wandanschluss) einer Warmwasserleitung bzw. einer Kaltwasserleitung verbunden. Der Wandanschluss hat üblicherweise ein Innengewinde. Die Wasserleitungen, das Armaturengehäuse und die jeweiligen Anschlüsse sind in der Regel aus Metall. Metall hat bekanntermaßen eine relativ hohe Wärmeleitfähigkeit. Da die Wärmeleitstrecke zwischen der Warmwasserseite und der Kaltwasserseite vor der Wand meist im Wesentlichen durch das Armaturengehäuse gebildet ist, kann sich Wärme von der Warmwasserseite auf die Kaltwasserseite übertragen. Dies kann dazu führen, dass sich das Wasser auf der Kaltwasserseite, d.h. in den Kaltwasser führenden Leitungen, auf eine kritische Temperatur von ca. 25°C oder höher erhöht, bei der die Bildung von Bakterien, wie Legionellen, begünstigt ist. Diese Problemstellung tritt vor allem dann auf, wenn eine Warmwasserzirkulationsleitung bis nahe an den Wandanschluss der Warmwasserleitung geführt ist. Denn durch die Zirkulation wird dafür gesorgt, dass das Warmwasser stets mit einer konstant hohen Temperatur, in der Regel nicht weniger als 55°C, an dem Wandanschluss der Warmwasserleitung anliegt. Eine Aufgabe der vorliegenden Erfindung ist es daher, ein Anschlussset anzugeben, mit welchem die an Trinkwasser gestellten gesetzlichen Anforderungen erfüllen lassen und hygienisch unbedenkliches Wasser gezapft werden kann. Die Dokumente DE102016103547A1 und WO2017/102154A1 befassen sich auch mit dem Problem des Wärmeüberganges von warmgehenden Leitungsabschnitten auf kaltgehende Leitungsabschnitte, insbesondere in Trinkwasserleitungen, und damit hervorgerufene Bildung von Mikrobiologie, insbesondere Legionellen.

Zur Lösung dieser Aufgabenstellung gibt die vorliegende Erfindung ein Anschlussset mit den Merkmalen von Anspruch 1 an. Dieses Anschlussset umfasst eine Aufputzarmatur mit einem Armaturengehäuse, in das mindestens ein Absperrventil aufgenommen ist und das einen Warmwasseranschluss, einen Kaltwasseranschluss und mindestens einen Auslauf aufweist, und zumindest ein Thermosiphonelement, das eine mit einem Wandanschluss einer Wasserleitung verbindbar Eingangsschnittstelle, eine mit dem Warmwasseranschluss oder dem Kaltwasseranschluss des Armaturengehäuses verbindbare Ausgangsschnittstelle und einen umfänglich geschlossenen Rohrabschnitt aus einem Material geringer Wärmeleitfähigkeit aufweist. Dabei ist das Thermosiphonelement derart ausgebildet, dass es so mit dem Warmwasseranschluss oder dem Kaltwasseranschluss des Armaturengehäuses und dem Wandanschluss der Wasserleitung verbunden werden kann, dass der Warmwasseranschluss oder der Kaltwasseranschluss des Armaturengehäuses im Wesentlichen parallel oder in Verlängerung zu dem Wandanschluss der Wasserleitung ausgerichtet ist. Mit anderen Worten soll die Aufputzarmatur mit Hilfe des Thermosiphonelements in der herkömmlichen Ausrichtung an die Wand anschließbar sein. Als herkömmliche Ausrichtung ist dabei zu verstehen, dass die Anschlüsse des Armaturengehäuses, die in der Regel als mit einer Überwurfmutter versehene rohrförmige Stutzen ausgebildet sind, einen im Wesentlichen rechten Winkel mit der Wand bilden. Das Thermosiphonelement ist in der Regel ein Rohr. Der umfänglich geschlossene Rohrabschnitt aus einem Material geringer Wärmeleitfähigkeit bildet für gewöhnlich zumindest abschnittsweise eine Außenwandung des Thermosiphonelements. Im Gegensatz zu einem Schlauch ist ein Rohr üblicherweise aus relativ steifem Material gefertigt.

Die Eingangsschnittstelle und die Ausgangsschnittstelle des Thermosyphonelements sind für gewöhnlich jeweils als metallisches Übergangsstück mit einem Außengewinde ausgebildet. Die Eingangsschnittstelle hat meist ein Außengewinde R 1/2. Die Ausgangsschnittstelle hat meist ein Außengewinde G 3/4. Das R 1/2 Gewinde ist üblicherweise ein vorteflonisiertes und durch Verschrauben dichtendes Gewinde. Das G 3/4 Gewinde ist für gewöhnlich durch Einkammern eines Dichtrings beim Verschrauben dicht. Der die Übergangsstücke verbindende Rohrabschnitt ist dann aus dem Material geringer Wärmeleitfähigkeit, bevorzugt aus Kunststoff. Gegebenenfalls können auch die Übergangsstücke aus Kunststoff, d.h. das ganze Thermosyphonelement aus Kunststoff sein. Vorzugsweise ist das Thermosiphonelement auf bzw. in den Wandanschluss auf- bzw. einschraubbar. Insbesondere ist das Thermosiphonelement fluiddicht mit dem Wandanschluss und dem Warm- oder Kaltwasseranschluss des Armaturengehäuses verbindbar.

Das Anschlussset nach der vorliegenden Erfindung erlaubt somit das Zapfen von hygienisch unbedenklichem Wasser, da der Wärmefluss von der Warmwasserseite auf die Kaltwasserseite durch den Abschnitt aus Material geringer Wärmeleitfähigkeit unterbrochen ist.

Bevorzugt weist das Anschlussset nach der vorliegenden Erfindung zwei Thermosyphonelemente auf, wobei das eine Thermosyphonelement mit seiner Eingangsschnittstelle mit dem Wandanschluss einer Warmwasserleitung und mit seiner Ausgangsschnittstelle mit dem Warmwasseranschluss des Armaturengehäuses und das andere Thermosyphonelement mit seiner Eingangsschnittstelle mit dem Wandanschluss einer Kaltwasserleitung und mit seiner Ausgangsschnittstelle mit dem Kaltwasseranschluss des Armaturengehäuses verbindbar ist. Dadurch kann die Wärmeleitung zwischen der Warmwasserseite und der Kaltwasserseite weiter verringert werden. Das erfindungsgemäße Anschlussset kann aber auch nur ein Thermosiphonelement aufweisen, das bevorzugt mit seiner Eingangsschnittstelle mit dem Wandanschluss der Warmwasserleitung und mit seiner Ausgangsschnittstelle mit dem Warmwasseranschluss des Armaturengehäuses zu verbinden ist. Das Anschlussset kann hierfür eine Hahnverlängerung und/oder einen sogenannten S-Anschluss aufweisen, mittels welchem der Kaltwasseranschluss der Aufputzarmatur an den Wandanschluss der Kaltwasserleitung anschließbar ist.

Nach einer bevorzugten Weiterbildung der vorliegenden Erfindung ist die Wärmeleitfähigkeit des Abschnitts aus Material geringer Wärmeleitfähigkeit höchstens 1/5, bevorzugt höchstens 1/10, weiter bevorzugt höchstens 1/15 und sehr bevorzugt höchstens 1/20 der Wärmeleitfähigkeit des Armaturengehäuses, welches in der Regel aus Metall gebildet ist. Bevorzugt ist das Material geringer Wärmeleitfähigkeit ein Kunststoff.

Nach einer weiteren bevorzugten Weiterbildung der vorliegenden Erfindung beträgt die Wärmeleitfähigkeit des Abschnitts aus Material geringer Wärmeleitfähigkeit weniger als 1 W/(m*K), bevorzugt weniger als 0,5 W/(m*K) und sehr bevorzugt weniger als 0,3 W/(m*K).

Nach einer weiteren bevorzugten Weiterbildung der vorliegenden Erfindung hat das Thermosyphonelement eine Erstreckung orthogonal zu der Eingangsschnittstelle, die einem Vielfachen des Nennquerschnitts, bevorzugt mindestens dem 6-fachen, weiter bevorzugt mindestens dem 7,5-fachen und besonders bevorzugt zwischen dem 7,5- und dem 8,5-fachen der Eingangsschnittstelle beträgt. Die Erstreckung orthogonal zu der Eingangsschnittstelle ist in der Regel aus dem Material geringer Wärmeleitfähigkeit gebildet.

Nach einer bevorzugten Weiterbildung der vorliegenden Erfindung hat der Warmwasseranschluss oder der Kaltwasseranschluss des Armaturengehäuses in der parallelen Ausrichtung aufgrund der Erstreckung orthogonal zur Eingangsschnittstelle einen vertikalen Versatz zu dem Wandanschluss der Wasserleitung. In der parallelen Ausrichtung ist in der Regel die Längsachse des Warmwasseranschlusses bzw. des Kaltwasseranschlusses des Armaturengehäuses parallel zu der Längsachse des Wandanschlusses, die für gewöhnlich einen rechten Winkel mit der Wand bildet. Der vertikale Versatz ist dementsprechend der Abstand zwischen diesen beiden Längsachsen in vertikaler Richtung. Üblicherweise ist die Längsachse des Warmwasseranschlusses bzw. des Kaltwasseranschlusses dabei in Schwerkraftrichtung unterhalb der Längsachse des Wandanschlusses angeordnet.

Damit kann ein Thermosyphoneffekt zwischen dem Wandanschluss der Warmwasserleitung und dem Warmwasseranschluss des Armaturengehäuses erzielt werden. In dem Thermosyphonelement stehendes warmes Wasser gibt Wärmeenergie an die Umgebung (Umgebungsluft, Leitungen, Armaturengehäuse) ab und kühlt dabei ab. Aufgrund der höheren Dichte gegenüber wärmerem Wasser sinkt das abgekühlte Wasser in dem Thermosyphonelement nach unten in Richtung des Warmwasseranschlusses des Armaturengehäuses, so dass sich der Wärmeübertrag auf die Kaltwasserseite über das Armaturengehäuse vermindert. Über die in dem Thermosyphonelement stehende Wassersäule, die zusätzlich von dem Material geringer Wärmeleitfähigkeit umgeben ist, ist das abgekühlte Wasser quasi von dem warmen Wasser der Warmwasserzirkulationsleitung isoliert.

Das Thermosyphonelement hat bevorzugt eine S-Form oder eine Schneckenform. Der Abschnitt aus Material geringer Wärmeleitfähigkeit ist demnach bevorzugt als gerade oder spiralförmige Rohrstrecke ausgebildet. Die Ausgangsschnittstelle ist für gewöhnlich parallel zu der Eingangsschnittstelle. Das Thermosyphonelement ist also im Übergangsbereich zwischen Eingangsschnittstelle bzw. Ausgangsschnittstelle und dem umfänglich geschlossenen Abschnitt aus Material geringer Wärmeleitfähigkeit in der Regel gebogen.

Nach einer weiteren bevorzugten Weiterbildung der vorliegenden Erfindung weist das Thermosiphonelement auf der der Eingangsschnittstelle gegenüberliegenden Seite eine Funktionsfläche zum Eingriff eines Montagewerkzeugs auf. Die Funktionsfläche ist vorzugsweise einteilig an dem Übergangsstück der Eingangsschnittstelle angeformt. Bevorzugt beinhaltet die Funktionsfläche eine in der Regel sechskantförmige Ausnehmung, mit der ein Montagewerkzeug in Eingriff gebracht werden kann, um die Eingangsschnittstelle des Thermosyphonelements mit dem Wandanschluss der Wasserleitung zu verbinden, insbesondere zu verschrauben oder beim Verschrauben einer Überwurfmutter des Thermosiphonelements dieses zu halten bzw. zu kontern.

In einem nebengeordneten Aspekt gibt die vorliegende Erfindung eine Trink- oder Brauchwasserinstallation mit einer Aufputzarmatur und mit einer einen Wandanschluss aufweisenden Warmwasserleitung, die mit einem Warmwasseranschluss der Aufputzarmatur kommuniziert, und einer einen Wandanschluss aufweisenden Kaltwasserleitung, die mit einem Kaltwasseranschluss der Aufputzarmatur kommuniziert, an, wobei die Aufputzarmatur ein Armaturengehäuse aufweist, in das mindestens ein Absperrventil aufgenommen ist und das einen Auslauf aufweist. Die Trink- oder Brauchwasserinstallation hat in der Regel einen Anschluss an das öffentliche Wasserversorgungsnetz, über den die Warmwasserleitung und die Kaltwasserleitung mit frischem Wasser gespeist werden. Die Warmwasserleitung kommuniziert für gewöhnlich mit einem Wassererwärmer, der das Wasser in der Warmwasserleitung auf die gewünschte Temperatur erwärmt. Weiter hat die Trink- oder Brauchwasserinstallation ein Thermosyphonelement, das mit einer Eingangsschnittstelle an dem Wandanschluss der Warmwasserleitung und mit einer Ausgangsschnittstelle an dem Warmwasseranschluss der Aufputzarmatur oder mit der Eingangsschnittstelle an dem Wandanschluss der Kaltwasserleitung und mit der Ausgangsschnittstelle an dem Kaltwasseranschluss der Aufputzarmatur angeschlossen ist, wobei das Thermosyphonelement einen umfänglich geschlossenen Rohrabschnitt aus einem Material geringer Wärmeleitfähigkeit aufweist und wobei der Warmwasseranschluss und der Kaltwasseranschluss der Aufputzarmatur in im Wesentlichen paralleler Ausrichtung zu den Wandanschlüssen angeordnet sind.

In der Regel ist das Thermosyphonelement mit der Eingangsschnittstelle an dem Wandanschluss der Warmwasserleitung und mit der Ausgangsschnittstelle an dem Warmwasseranschluss der Aufputzarmatur angeschlossen. Der Kaltwasseranschluss der Aufputzarmatur kann direkt oder mittels einer Hahnverlängerung und/oder einem sogenannten S-Anschluss an den Wandanschluss der Kaltwasserleitung angeschlossen sein. Bevorzugt ist aber sowohl zwischen dem Wandanschluss der Warmwasserleitung und dem Warmwasseranschluss der Aufputzarmatur als auch zwischen dem Wandanschluss der Kaltwasserleitung und dem Kaltwasseranschluss der Aufputzarmatur jeweils ein Thermosyphonelement vorgesehen. Das Thermosyphonelement kann ggf. mit seiner Eingangsschnittstelle über eine Hahnverlängerung mit dem Wandanschluss der Warmwasserleitung bzw. der Kaltwasserleitung verbunden sein. Das Thermosyphonelement ist vorzugsweise wie eingangs beschrieben bzw. nach einer oder mehreren der voranstehend diskutierten Weiterbildungen ausgebildet.

Nach einer bevorzugten Weiterbildung der vorliegenden Erfindung ist der Warmwasseranschluss und/oder der Kaltwasseranschluss der Aufputzarmatur bei der erfindungsgemäßen Trink- oder Brauchwasserinstallation in Schwerkraftrichtung unterhalb des zugeordneten Wandanschlusses angeordnet. Damit kann ein Thermosyphoneffekt mit den obig diskutierten Vorteilen erreicht werden.

Nach einer weiteren bevorzugten Weiterbildung der vorliegenden Erfindung weist die Trink- oder Brauchwasserinstallation zumindest eine das Thermosiphonelement bzw. eines der Thermosyphonelemente zumindest teilweise verdeckende Rosette auf. Durch eine Durchgangsöffnung in der Rosette ist üblicherweise die Ausgangsschnittstelle des Thermosyphonelements hindurchgesteckt. Der Abschnitt aus Material geringer Wärmeleitfähigkeit und die Eingangsschnittstelle des Thermosyphonelements sind in der Regel durch Anlage der Rosette gegen die Wand umfänglich verdeckt. Die Rosette kann an der Anlagefläche an der Wand mittels einer Dichtlippe gegenüber dieser abgedichtet sein. Die Rosette hat damit einerseits eine ästhetische Funktion und andererseits die Funktion zu verhindern, dass Wasser in die Wandöffnung gelangt, in der der Wandanschluss der Wasserleitung liegt. Jeweils ein Thermosyphonelement kann von jeweils einer Rosette verdeckt sein.

Bevorzugt hat die Trink- oder Brauchwasserinstallation eine einzige Rosette, die sowohl den Thermosyphon der Warmwasserseite als auch den Thermosyphon der Kaltwasserseite zumindest teilweise verdeckt. Die Ästhetik der Trink- oder Brauchwasserinstallation kann so aufgewertet werden. Des Weiteren reduzieren sich die Produktionskosten, da nur eine statt zwei Rosetten gefertigt werden muss.

Nach einer weiteren bevorzugten Weiterbildung der vorliegenden Erfindung weist die erfindungsgemäße Rosette mindestens eine Belüftungsöffnung auf. Die Belüftungsöffnung ist in der Regel eine Durchgangsbohrung in der Rosette. Diese hat üblicherweise einen kleineren Durchmesser als die Durchgangsöffnung, durch die die Ausgangsschnittstelle des Thermosyphonelements hindurchgeführt ist. Durch die Belüftungsöffnung kommuniziert die Luft unter der Rosette mit der Umgebungsatmosphäre, so dass ein Wärmestau unter der Rosette vermieden werden kann. Die Rosette kann auch Teil des Anschlusssets nach der vorliegenden Erfindung und für sich erfindungswesentlich sein.

Weitere Einzelheiten und Vorteile der vorliegenden Erfindung ergeben sich aus der nachfolgenden Beschreibung eines Ausführungsbeispiels in Verbindung mit der Zeichnung. In dieser zeigen:
- Fig. 1: eine Explosionsdarstellung eines Ausführungsbeispiels eines Anschlusssets nach der vorliegenden Erfindung,
- Fig. 2: eine Draufsicht auf ein Thermosyphonelement nach einem alternativen Ausführungsbeispiel und
- Fig. 3: eine Seitenansicht des Thermosyphonelements nach Fig. 2.

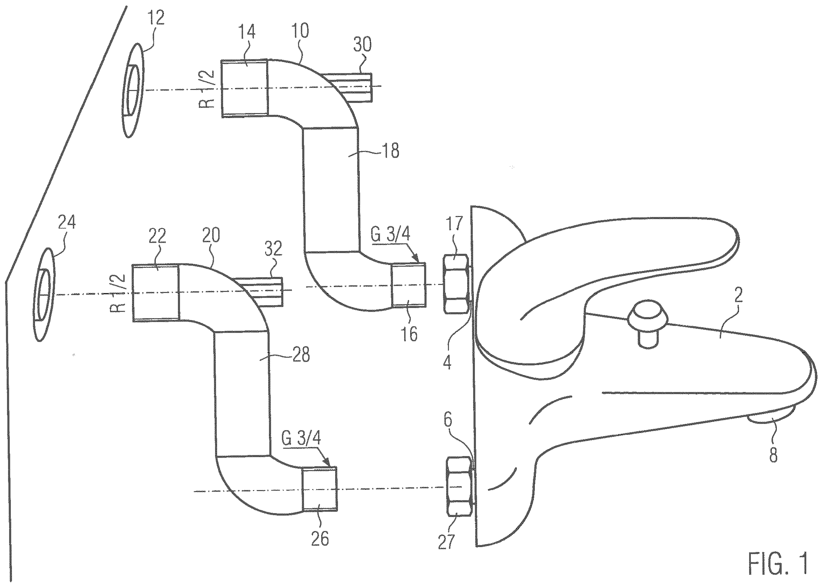

Das in Fig. 1 gezeigte Ausführungsbeispiel eines Anschlusssets beinhaltet eine Aufputzarmatur mit einem Armaturengehäuse 2, das einen rohrförmigen Warmwasseranschlussstutzen 4 und einen rohrförmigen Kaltwasseranschlussstutzen 6, sowie einen Auslauf 8 ausbildet. In das Armaturengehäuse 2 ist ein Absperrventil zum Mischen von kaltem und warmem Wasser aufgenommen, das vorliegend als Einhebelmischer ausgebildet ist. Ein Thermosyphonelement 10 ist mit einem in einer Wand liegenden und ein Innengewinde aufweisenden rohrförmigen Anschluss 12 einer Warmwasserleitung über eine an dem einen Ende des Thermosyphonelements 10 ausgebildete Eingangsschnittstelle 14 verbindbar. Die Eingangsschnittstelle 14 weist hierfür ein Außengewinde R 1/2 auf, das dichtend in das Innengewinde des Wandanschlusses 12 einschraubbar ist. An dem anderen Ende des Thermosyphonelements 10 bildet dieses eine Ausgangsschnittstelle 16 aus, die ein Außengewinde G 3/4 aufweist. Die Ausgangsschnittstelle 16 ist mit dem Warmwasseranschluss 4 über eine Überwurfmutter 17 am Warmwasseranschlussstutzen 4 verschraubbar. Beim Verschrauben wird ein nicht dargestellter Dichtring verpresst. Die Eingangsschnittstelle 14 und die Ausgangsschnittstelle 16 sind jeweils über einen gebogenen Abschnitt mit einem die beiden Enden des Thermosyphonelements 10 verbindenden geraden Rohrabschnitt aus Kunststoff 18 verbunden, so dass die Eingangsschnittstelle 14 und die Ausgangsschnittstelle 16 parallel zueinander ausgerichtet sind.

Das Thermosyphonelement 10 ist dabei so mit dem Wandanschluss 12 zu verbinden, dass sich der gerade Rohrabschnitt 18 in im Wesentlichen vertikaler Richtung erstreckt. Dadurch kann der Warmwasseranschlussstutzen 4 in Schwerkraftrichtung unterhalb des Wandanschlusses 12 angeordnet und ein Thermosyphoneffekt erzielt werden. Die Wärmeübertragung von der Warmwasserseite über das metallische Armaturengehäuse 2 auf die Kaltwasserseite des Kaltwasseranschlussstutzens 6 wird so verringert. Auch der gerade Rohrabschnitt 18 aus Kunststoff, der Wärme schlecht leitet, hat diese Wirkung. Ein zweites Thermosyphonelement 20, das identisch zu dem ersten Thermosyphonelement 10 ausgebildet ist, ist mit seiner Eingangsschnittstelle 22 mit einem in einer Wand liegenden und ein Innengewinde aufweisenden rohrförmigen Anschluss 24 einer Kaltwasserleitung verbindbar. Mit seiner Ausgangsschnittstelle 26 ist das Thermosyphonelement 20 mit dem Kaltwasseranschluss 6 des Armaturengehäuses 2 mittels einer Überwurfmutter 27 verschraubbar. Beim Verschrauben wird wiederum ein nicht dargestellter Dichtring verpresst. Der gerade Rohrabschnitt aus Kunststoff des zweiten Thermosyphonelements 20 ist in der Fig. 1 mit dem Bezugszeichen 28 gekennzeichnet. An der der Eingangsschnittstelle gegenüberliegenden Seite des Thermosyphonelements 10, 20 ist im Bereich des gebogenen Abschnitts einteilig ein Montagenocken 30, 32 angeformt. Der Montagenocken 30, 32 beinhaltet eine Funktionsfläche, die eine sechskantförmige Ausnehmung aufweist. Mit dieser Ausnehmung kann ein Sechskantwerkzeug in Eingriff gebracht werden, um das Thermosyphonelement 10, 20 in den Wandanschluss 12, 24 einzuschrauben. Die Überwurfmuttern 17, 27 werden für gewöhnlich mit Hilfe einer Armaturenzange auf die Gewinde der Ausgangsschnittstellen 16, 26 aufgeschraubt.

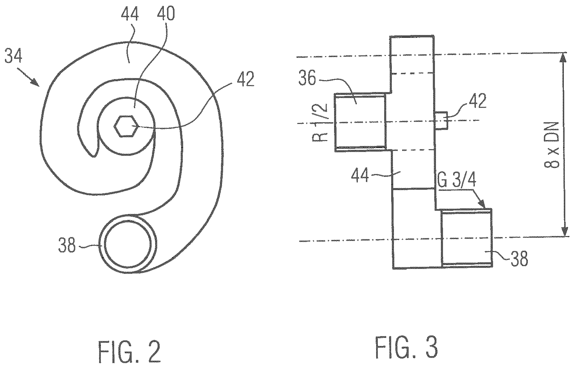

Die Fig. 2 zeigt eine Draufsicht auf ein Thermosyphonelement 34 nach einem alternativen Ausführungsbeispiel. Das Thermosyphonelement 34 hat eine Eingangsschnittstelle 36 mit einem Außengewinde R 1/2 und eine Ausgangsschnittstelle 38 mit einem Außengewinde G 3/4 (siehe Fig. 3). Die Eingangsschnittstelle 36 ist in der Fig. 2 nicht zu sehen, da die Draufsicht von der gegenüberliegenden Seite auf das Thermosyphonelement 34 gerichtet ist. In der Fig. 2 ist daher der Befestigungsnocken 40 zu sehen, der die Funktionsfläche mit der sechskantförmigen Ausnehmung 42 aufweist. Die Eingangsschnittstelle 36 und die Ausgangsschnittstelle 38 sind über einen spiralförmigen Rohrabschnitt 44 aus Kunststoff miteinander verbunden.

In der in Fig. 3 abgebildeten Seitenansicht ist zu erkennen, dass die Eingangsschnittstelle 36 und die Ausgangsschnittstelle 38 parallel und versetzt zueinander ausgerichtet sind. Der Versatz ist dabei geringer als der größte Durchmesser der Spirale, der in dem vorliegenden Fall das Achtfache des Nenndurchmessers der Eingangsschnittstelle 36 beträgt. Mit der Spiralform des Thermosyphonelements 34 kann einerseits ein Thermosyphoneffekt erzielt und andererseits der Versatz zwischen Eingangsschnittstelle 36 und Ausgangsschnittstelle 38 im Vergleich zu der Ausgestaltung mit einer geraden Rohrstrecke aus Kunststoff verkürzt werden. Bei der Montage kann das spiralförmige Thermosyphonelement 34 Höhenunterschiede zwischen den Wandanschlüssen 12, 24 besser ausgleichen, so dass die Aufputzarmatur leichter horizontal, beispielsweise mit Hilfe einer Wasserwaage, ausgerichtet werden kann.

### Bezugszeichenliste

- 2: Armaturengehäuse
- 4: Warmwasseranschlussstutzen
- 6: Kaltwasseranschlussstutzen
- 8: Auslauf
- 10: Thermosyphonelement
- 12: Wandanschluss einer Warmwasserleitung
- 14: Eingangsschnittstelle
- 16: Ausgangsschnittstelle
- 17: Überwurfmutter
- 18: Rohrabschnitt aus Kunststoff
- 20: Thermosyphonelement
- 22: Eingangsschnittstelle
- 24: Wandanschluss einer Kaltwasserleitung
- 26: Ausgangsschnittstelle
- 27: Überwurfmutter
- 28: Rohrabschnitt aus Kunststoff
- 30, 32: Montagenocken
- 34: Thermosyphonelement
- 36: Eingangsschnittstelle
- 38: Ausgangsschnittstelle
- 40: Befestigungsnocken
- 42: Funktionsfläche
- 44: spiralförmiger Rohrabschnitt aus Kunststoff

## Patentansprüche

1. Anschlussset umfassend eine Aufputzarmatur mit einem Armaturengehäuse (2), in das mindestens ein Absperrventil aufgenommen ist und das einen Warmwasseranschluss (4), einen Kaltwasseranschluss (6) und mindestens einen Auslauf (8) aufweist, und zumindest ein Thermosiphonelement (10, 20; 34), das eine mit einem Wandanschluss (12, 24) einer Wasserleitung verbindbare Eingangsschnittstelle (14, 22; 36), eine mit dem Warmwasseranschluss (4) oder dem Kaltwasseranschluss (6) des Armaturengehäuses (2) verbindbare Ausgangsschnittstelle (16, 26; 38) und einen umfänglich geschlossenen Rohrabschnitt (18, 28; 44) aus einem Material geringer Wärmeleitfähigkeit aufweist, **dadurch gekennzeichnet, dass** das Thermosiphonelement (10, 20; 34) derart ausgebildet ist, dass es so mit dem Wandanschluss (12, 24) und dem Warmwasseranschluss (4) oder dem Kaltwasseranschluss (6) des Armaturengehäuses (2) verbindbar ist, dass der Warmwasseranschluss (4) und/oder der Kaltwasseranschluss (6) des Armaturengehäuses (2) im Wesentlichen parallel oder in Verlängerung zu dem Wandanschluss (12, 24) der Wasserleitung ausgerichtet ist.

2. Anschlussset nach Anspruch 1, **dadurch gekennzeichnet, dass** das Armaturengehäuse (2) aus Metall gebildet ist und dass die Wärmeleitfähigkeit des Rohrabschnitts (18, 28) aus Material geringer Wärmeleitfähigkeit höchstens 1/5, bevorzugt höchstens 1/10, weiter bevorzugt höchstens 1/15 und sehr bevorzugt höchstens 1/20 der Wärmeleitfähigkeit des Armaturengehäuses (2) beträgt, wobei das Material geringer Wärmeleitfähigkeit bevorzugt ein Kunststoff ist.

3. Anschlussset nach Anspruch 1 oder 2, **dadurch gekennzeichnet, dass** die Wärmeleitfähigkeit des Abschnitts aus Material geringer Wärmeleitfähigkeit weniger als 1 W/(m*K), bevorzugt weniger als 0,5 W/(m*K) und sehr bevorzugt weniger als 0,3 W/(m*K) beträgt.

4. Anschlussset nach einem der vorherigen Ansprüche, **dadurch gekennzeichnet, dass** das Thermosiphonelement (10, 20) eine Erstreckung in orthogonaler Richtung zu der Eingangsschnittstelle (14, 22) und der Ausgangsschnittstelle (16, 26) hat, die ein Vielfaches des Nennquerschnitts der Eingangsschnittstelle (14, 22) beträgt.

5. Anschlussset nach Anspruch 4, **dadurch gekennzeichnet, dass** der Warmwasseranschluss (4) und/oder der Kaltwasseranschluss (6) des Armaturengehäuses (2) in der zu dem Wandanschluss (12, 24) parallelen Ausrichtung einen vertikalen Versatz zu dem Wandanschluss (12, 24) hat.

6. Anschlussset nach einem der vorherigen Ansprüche, **dadurch gekennzeichnet, dass** das Thermosiphonelement (10, 20) S-förmig ist und dass der Abschnitt (18, 28) aus Material geringer Wärmleitfähigkeit als gerade Rohrstrecke ausgebildet ist.

7. Anschlussset nach einem der Ansprüche 1 bis 5, **dadurch gekennzeichnet, dass** das Thermosiphonelement (34) schneckenförmig ist und dass der Abschnitt (44) aus einem Material geringer Wärmleitfähigkeit als spiralförmige Rohrstrecke ausgebildet ist.

8. Anschlussset nach einem der vorherigen Ansprüche, **dadurch gekennzeichnet, dass** auf der der Eingangsschnittstelle (36) gegenüberliegenden Seite des Thermosiphonelements (34) eine Funktionsfläche (42) zum Eingriff eines Montagewerkzeugs vorgesehen ist.

9. Trink- oder Brauchwasserinstallation mit einer Aufputzarmatur und mit einer einen Wandanschluss (12) aufweisenden Warmwasserleitung, die mit einem Warmwasseranschluss (4) der Aufputzarmatur kommuniziert, und einer einen Wandanschluss (24) aufweisenden Kaltwasserleitung, die mit einem Kaltwasseranschluss (6) der Aufputzarmatur kommuniziert, wobei die Aufputzarmatur ein Armaturengehäuse (2) aufweist, in das mindestens ein Absperrventil aufgenommen ist und das einen Auslauf (8) aufweist, und einem Thermosiphonelement (10, 20), das mit einer Eingangsschnittstelle (14, 22) an dem Wandanschluss (12) der Warmwasserleitung und mit einer Ausgangsschnittstelle (16, 26) an dem Warmwasseranschluss (4) der Aufputzarmatur oder mit der Eingangsschnittstelle (14, 22) an dem Wandanschluss (24) der Kaltwasserleitung und mit der Ausgangsschnittstelle (16, 26) an dem Kaltwasseranschluss (6) der Aufputzarmatur angeschlossen ist, wobei das Thermosiphonelement (10, 20) einen umfänglich geschlossenen Rohrabschnitt (18, 28) aus einem Material geringer Wärmleitfähigkeit aufweist, **dadurch gekennzeichnet, dass** der Warmwasseranschluss (4) und der Kaltwasseranschluss (6) der Aufputzarmatur in im Wesentlichen paralleler Ausrichtung zu den Wandanschlüssen (12, 24) angeordnet sind.

10. Trink- oder Brauchwasserinstallation nach Anspruch 9, **dadurch gekennzeichnet, dass** sowohl zwischen dem Wandanschluss (12) der Warmwasserleitung und dem Warmwasseranschluss (4) der Aufputzarmatur als auch zwischen dem Wandanschluss (24) der Kaltwasserleitung und dem Kaltwasseranschluss (6) der Aufputzarmatur ein Thermosiphonelement (10, 20) vorgesehen ist.

11. Trink- oder Brauchwasserinstallation nach Anspruch 9, **gekennzeichnet durch** eine das Thermosiphonelement (10, 20) zumindest teilweise verdeckende Rosette.

12. Trink- oder Brauchwasserinstallation nach Anspruch 10, **gekennzeichnet durch** eine die Thermosiphonelemente (10, 20) zumindest teilweise verdeckende Rosette.

13. Trink- oder Brauchwasserinstallation nach Anspruch 11 oder 12, **dadurch gekennzeichnet, dass** die Rosette mindestens eine Belüftungsöffnung aufweist.

14. Trink- oder Brauchwasserinstallation nach einem der Ansprüche 9 bis 13, **dadurch gekennzeichnet, dass** der Warmwasseranschluss (4) und/oder der Kaltwasseranschluss (6) der Aufputzarmatur in Schwerkraftrichtung unterhalb dem zugeordneten Wandanschluss (12, 24) angeordnet ist.

## Claims

1. Connection set comprising a surface fitting which has a fitting housing (2), in which at least one shut-off valve is received and which has a hot water connection (4), a cold water connection (6) and at least one outlet (8), and at least one thermosiphon element (10, 20; 34) which has an input interface (14, 22; 36) which can be connected to a wall connection (12, 24) of a water pipe, an output interface (16, 26; 38) which can be connected to the hot water connection (4) or the cold water connection (6) of the fitting housing (2) and a circumferentially closed tube portion (18, 28; 44) made of a material that has a low thermal conductivity, **characterised in that** the thermosiphon element (10, 20; 34) is designed such that it can be connected to the wall connection (12, 24) and to the hot water connection (4) or the cold water connection (6) of the fitting housing (2) so that the hot water connection (4) and/or the cold water connection (6) of the fitting housing (2) are substantially parallel to or aligned along the length of the wall connection (12, 24) of the water pipe.

2. Connection set according to claim 1, **characterised in that** the fitting housing (2) is made of metal, and **in that** the thermal conductivity of the tube portion (18, 28) made of material that has a low thermal conductivity is at most 1/5, preferably at most 1/10, more preferably at most 1/15 and very preferably at most 1/20 of the thermal conductivity of the fitting housing (2), the material that has a low thermal conductivity preferably being a plastics material.

3. Connection set according to either claim 1 or claim 2, **characterised in that** the thermal conductivity of the portion made of material that has a low thermal conductivity is less than 1 W/(m*K), preferably less than 0.5 W/(m*K) and very preferably less than 0.3 W/(m*K).

4. Connection set according to any of the preceding claims, **characterised in that** the thermosiphon element (10, 20) has an extension in the orthogonal direction in relation to the input interface (14, 22) and to the output interface (16, 26) which is a multiple of the nominal cross section of the input interface (14, 22).

5. Connection set according to claim 4, **characterised in that** the hot water connection (4) and/or the cold water connection (6) of the fitting housing (2) has a vertical offset to the wall connection (12, 24) in the alignment parallel to the wall connection (12, 24).

6. Connection set according to any of the preceding claims, **characterised in that** the thermosiphon element (10, 20) is S-shaped, and **in that** the portion (18, 28) made of material that has a low thermal conductivity is designed as a straight tube line.

7. Connection set according to any of claims 1 to 5, **characterised in that** the thermosiphon element (34) is helical, and **in that** the portion (44) made of a material that has a low thermal conductivity is designed as a helical tube line.

8. Connection set according to any of the preceding claims, **characterised in that** a functional surface (42) for engaging a mounting tool is provided on the side of the thermosiphon element (34) opposite the input interface (36).

9. Drinking or service water installation comprising a surface fitting and a hot water pipe which has a wall connection (12) and communicates with a hot water connection (4) of the surface fitting, and a cold water pipe which has a wall connection (24) and communicates with a cold water connection (6) of the surface fitting, the surface fitting having a fitting housing (2) in which at least one shut-off valve is received and which has an outlet (8), and a thermosiphon element (10, 20) which is connected by means of an input interface (14, 22) to the wall connection (12) of the hot water pipe and by means of an output interface (16, 26) to the hot water connection (4) of the surface fitting, or by means of the input interface (14, 22) to the wall connection (24) of the cold water pipe and by means of the output interface (16, 26) to the cold water connection (6) of the surface fitting, the thermosiphon element (10, 20) having a circumferentially closed tube portion (18, 28) made of a material that has a low thermal conductivity, **characterised in that** the hot water connection (4) and the cold water connection (6) of the surface fitting are arranged in substantially parallel alignment in relation to the wall connections (12, 24).

10. Drinking or service water installation according to claim 9, **characterised in that** a thermosiphon element (10, 20) is provided both between the wall connection (12) of the hot water pipe and the hot water connection (4) of the surface fitting as well as between the wall connection (24) of the cold water pipe and the cold water connection (6) of the surface fitting.

11. Drinking or service water installation according to claim 9, **characterised by** a rosette which at least partially covers the thermosiphon element (10, 20).

12. Drinking or service water installation according to claim 10, **characterised by** a rosette which at least partially covers the thermosiphon elements (10, 20).

13. Drinking or service water installation according to either claim 11 or claim 12, **characterised in that** the rosette has at least one ventilation opening.

14. Drinking or service water installation according to any of claims 9 to 13, **characterised in that** the hot water connection (4) and/or the cold water connection (6) of the surface fitting is arranged below the associated wall connection (12, 24) in the direction of gravity.

## Revendications

1. Ensemble de raccordement comprenant un robinet monté en surface avec un boîtier de robinet (2), comprenant au moins une vanne d'arrêt et comportant un raccord d'eau chaude (4), un raccord d'eau froide (6) et au moins une évacuation (8), et au moins un élément de thermosiphon (10, 20 ; 34) qui comporte une interface d'entrée (14, 22 ; 36) connectable à un raccord mural (12, 24) d'une canalisation d'eau, une interface de sortie (16, 26 ; 38) connectable au raccord d'eau chaude (4) ou au raccord d'eau froide (6) du boîtier de robinet (2), et comportant une section de tuyau fermée circonférentielle (18, 28; 44) en un matériau à faible conductivité calorifique,
**caractérisé en ce que** l'élément de thermosiphon (10, 20 ; 34) est constitué de telle sorte qu'il est connectable au raccord mural (12, 24) et au raccord d'eau chaude (4) ou au raccord d'eau froide (6) du boîtier de robinet (2), et que le raccord d'eau chaude (4) et/ou le raccord d'eau froide (6) du boîtier de robinet (2) est orienté de manière essentiellement parallèle au raccord mural (12, 24) de la canalisation d'eau ou dans son prolongement.

2. Ensemble de raccordement selon la revendication 1, **caractérisé en ce que** le boîtier de robinet (2) est constitué en métal et **en ce que** la conductivité calorifique du matériau de la section de tuyau (18, 28) est inférieure ou égale à 1/5, de préférence à 1/10, de préférence encore à 1/15 et de manière très préférentielle à 1/20 de la conductivité calorifique du boîtier de robinet (2), dans lequel le matériau à moindre conductivité calorifique est préférablement un plastique.

3. Ensemble de raccordement selon la revendication 1 ou 2, **caractérisé en ce que** la conductivité calorifique de la section en matériau à moindre conductivité calorifique est inférieure à 1 W/(m*K), de préférence inférieure à 0,5 W/(m*K) et de manière très préférentielle inférieure à 0,3 W/(m*K).

4. Ensemble de raccordement selon l'une des revendications précédentes, **caractérisé en ce que** l'élément de thermosiphon (10, 20) présente une extension en direction orthogonale à l'interface d'entrée (14, 22) et à l'interface de sortie (16, 26) dont la surface est un multiple de la section nominale de l'interface d'entrée (14, 22).

5. Ensemble de raccordement selon la revendication 4, **caractérisé en ce que** le raccord d'eau chaude (4) et/ou le raccord d'eau froide (6) du boîtier de robinet (2) présente un décalage vertical par rapport au raccord mural (12, 24) dans une direction parallèle au raccord mural (12, 24).

6. Ensemble de raccordement selon l'une des revendications précédentes, **caractérisé en ce que** l'élément de thermosiphon (10, 20) présente une forme de S, et **en ce que** la section (18, 28) est constituée d'un matériau dont la conductivité thermique est inférieure à celle d'une section de tuyau droite.

7. Ensemble de raccordement selon l'une des revendications 1 à 5, **caractérisé en ce que** l'élément de thermosiphon (34) est hélicoïdal, et **en ce que** la section (44) est constituée d'un matériau dont la conductivité thermique est inférieure à celle de la section de tuyau en spirale.

8. Ensemble de raccordement selon l'une des revendications précédentes, **caractérisé en ce que** le côté opposé à l'interface d'entrée (36) de l'élément de thermosiphon (34) est pourvu d'une surface fonctionnelle (42) pour s'engager avec un outil de montage.

9. Installation d'eau potable ou d'eau de service avec un robinet monté en surface et avec une canalisation d'eau chaude comportant un raccord mural (12) qui communique avec un raccord d'eau chaude (4) du robinet monté en surface, et une conduite d'eau froide comportant un raccord mural (24) qui communique avec un raccord d'eau froide (6) du robinet monté en surface, dans laquelle le robinet monté en surface comporte un boîtier de robinet (2) comprenant au moins une vanne d'arrêt et une évacuation (8), et un élément de thermosiphon (10, 20) qui est raccordé par une interface d'entrée (14, 22) au raccord mural (12) de la conduite d'eau chaude et par une interface de sortie (16, 26) au raccord d'eau chaude (4) du robinet monté en surface, ou par l'interface d'entrée (14, 22) au raccord mural (24) de la conduite d'eau froide et par l'interface de sortie (16, 26) au raccord d'eau froide (6) du robinet monté en surface, dans laquelle l'élément de thermosiphon (10, 20) comprend une section de tuyau fermée circonférentielle (18, 28) constituée d'un matériau à plus faible conductivité thermique, **caractérisée en ce que** le raccord d'eau chaude (4) et le raccord d'eau froide (6) du robinet monté en surface sont agencés dans une direction essentiellement parallèle aux raccords muraux (12, 24).

10. Installation d'eau potable ou d'eau de service selon la revendication 9, **caractérisée en ce qu'**un élément de thermosiphon (10, 20) est pourvu entre le raccord mural (12) de la canalisation d'eau chaude et le raccord d'eau chaude (4) du robinet monté en surface, ainsi qu'entre le raccord mural (24) de la conduite d'eau froide et le raccord d'eau froide (6) du robinet monté en surface.

11. Installation d'eau potable ou d'eau de service selon la revendication 9, **caractérisée par** une rosace recouvrant au moins partiellement l'élément de thermosiphon (10, 20).

12. Installation d'eau potable ou d'eau de service selon la revendication 10, **caractérisée par** une rosace recouvrant au moins partiellement les éléments de thermosiphon (10, 20) .

13. Installation d'eau potable ou d'eau de service selon la revendication 11 ou 12, **caractérisée en ce que** la rosace comprend au moins une ouverture de ventilation.

14. Installation d'eau potable ou d'eau de service selon l'une des revendications 9 à 13, **caractérisée en ce que** le raccord d'eau chaude (4) et/ou le raccord d'eau froide (6) du robinet monté en surface est agencé sous le raccord mural associé (12, 24) en direction de la gravité.
